# EUROPEAN PATENT APPLICATION

(11) **EP 2 962 924 A1**
(43) Date of publication of application: **06.01.2016**
(21) Application number: 14757358.8
(22) Date of filing: 24.02.2014
(51) Int. Cl.: B62J 23/00, B62J 6/18, B62J 11/00, B62J 99/00, B62K 23/06

(54) **STRUCTURE FOR FRONT PART OF SADDLED VEHICLE**

(30) Priority: 28.02.2013 JP 2013038992
(71) Applicant: Honda Motor Co., Ltd., Minato-ku Tokyo 107-8556 (JP)
(72) Inventor: SUZUKI, Kiyohito, Wako-shi Saitama 351-0193 (JP); IKEDA, Hideki, Wako-shi Saitama 351-0193 (JP); KIN, Tetsukun, Wako-shi Saitama 351-0193 (JP); ARAI, Yoshihiro, Wako-shi Saitama 351-0193 (JP); KAWANO, Sunao, Wako-shi Saitama 351-0193 (JP)
(74) Representative: Brevalex
(86) International application number: PCT/JP2014/054298
(87) International publication number: WO 2014/132913

(57) **Abstract**

A structure for the front part of a saddled vehicle has: a head pipe (21) which is provided at the front of a vehicle body frame (20) and which rotatably supports a front wheel (14) in a steerable manner; a front-cover stay (30) which is provided to the head pipe (21) and which extends in front of the vehicle; a front cover (41) which is provided to the front-cover stay (30) and which covers the front of the head pipe (21); an operator (18) which is provided above the head pipe (21) and which operates the brake device (15) of the front wheel; and an operational force transmission member (54) which is disposed within the front cover (41) and which transmits the operational force of the operator (18) to the brake device (15). The front-cover stay (30) is provided with a cylindrical section (34) which is formed in a cylindrical shape in such a manner that the upper part and the lower part thereof are open, and the operational force transmission member (54) is routed so as to pass through the inside of the cylindrical section (34).

## Description

### Technical Field

The present invention relates to an improvement in a structure for a front part of a saddled vehicle.

### Background Art

As straddle-riding type vehicles or saddled vehicles, so-called naked type vehicles having no front cover and vehicles having a front cover are practically used. When a vehicle has a front cover, the vehicle must have a support structure for supporting the front cover. Such kind of support structures are known, for example, as disclosed in Patent Literature 1.

A saddled vehicle disclosed in Patent Literature 1 includes an attachment stay provided on a head pipe via an attachment piece, and a front cover supported by the attachment stay.

The saddled vehicle further includes a brake hose or brake cable routed inside the front cover. Since a front wheel is steerably mounted on the vehicle and the brake hose or brake cable follows the front wheel and a handlebar, it is necessary to secure a flexible range of the brake hose or brake cable.

However, because of the attachment stay arranged in front of the head pipe at a center in a vehicle width direction, the brake hose or brake cable cannot be routed in front of the head pipe at the center in the vehicle width direction. That is, the brake hose or brake cable should be routed away from the center in the vehicle width direction, and thus the length of the brake hose or brake cable is increased. Further, it is necessary to provide an additional member for limiting the flexible range of the long brake hose or brake cable.

Therefore, in the vehicle having the front cover, an improved structure for a front part or front part structure is desired which allows the brake hose or brake cable to be routed in front of the head pipe at the center in the vehicle width direction, while reducing the number of components.

### Prior Art Literature

### Patent Literature

Patent Literature 1: Japanese Patent Publication No. 3457303

### Summary of Invention

### Technical Problems

It is an object of the present invention to provide a front part structure of a saddled vehicle which allows a brake hose or brake cable to be routed in front of a head pipe at a center in a vehicle width direction, while reducing the number of components.

### Solutions to Problems

According to one preferred form of the present invention, there is provided a front part structure of a saddled vehicle, which includes a head pipe disposed to constitute a front part of a vehicle body frame and steerably supporting a front wheel, a front-cover stay fixed to the head pipe and extending toward the front of the vehicle, a front cover mounted on the front-cover stay to cover a front part of the head pipe, an operator provided above the head pipe for operating a brake device of the front wheel, and an operational force transmission member in the form of a brake hose or brake cable disposed within the front cover for transmitting an operational force of the operator to the brake device, characterized in that: the front-cover stay has a cylindrical section formed in a cylindrical shape having upper and lower parts thereof opened; and the brake hose or brake cable is arranged to pass through the inside of the cylindrical section.

Preferably, the front-cover stay is formed of resin.

It is preferable that the front-cover stay is provided with a grommet on a front part thereof, the front cover has a projection formed on an inner side thereof, and the projection is inserted into the grommet to be engaged therewith.

Preferably, the front-cover stay has an auxiliary holding section formed integrally therewith for holding auxiliary components.

It is also preferable that a vehicle speed detection device for detecting the speed of the vehicle is provided at a position in the vicinity of the brake device and closer to a rotation center of the front wheel than the brake device, a meter for displaying speed information of the vehicle is provided above the head pipe, and a meter cable for transmitting a signal from the vehicle speed detection device to the meter is guided by being held between the front-cover stay and the head pipe.

Preferably, the cylindrical section of the front-cover stay is formed to be openable and closable.

It is preferable that the front cover is provided with a lamp, and a connector of a vehicle-side power supply harness for connection with a harness extending from the lamp is fixed to the front-cover stay.

Preferably, the front cover and the front-cover stay have a guide means for guiding the projection to the grommet.

### Advantageous Effects of Invention

In the invention, the front-cover stay has the cylindrical section having the upper and lower parts thereof opened. The brake hose or brake cable is arranged to pass through the inside of the cylindrical section. With this arrangement, the brake hose or brake cable can be easily routed in front of the head pipe at a center in a vehicle width direction.

Further, it is possible to limit a flexible range of the brake hose or brake cable by the cylindrical section. That is, there is no need to provide an additional member for limiting the flexible range of the brake hose or brake cable, and the number of components can therefore be reduced.

If the brake hose or brake cable is disposed in a state where it can come into contact with the front-cover stay, there is a possibility of cable abrasion. In the invention, however, since the front-cover stay is formed of soft material, resin, the front-cover stay can have a curved part with an improved degree of freedom, and the cable abrasion can thereby be suppressed.

Furthermore, in the invention, the front-cover stay is provided with the grommet on a front part thereof, and the front cover has the projection formed on the inner side thereof. By inserting the projection into the grommet, the front cover is attached to the front-cover stay. Thus, there is no need to provide another fastening member separate from the front cover and the front-cover stay, and the assemblability of the front cover can therefore be improved.

In the invention, the front-cover stay has the auxiliary holding section formed integrally therewith for holding auxiliary components. The front-cover stay has the cylindrical section that allows the brake hose or brake cable to pass therethrough, and the auxiliary holding section is formed on the outside of the cylindrical section. Thus, the brake hose or brake cable and the auxiliary components can be held together by the front-cover stay, thereby making compact the front part of the vehicle.

Furthermore, in the invention, the vehicle speed detection device is arranged at the position closer to the rotation center of the front wheel than the brake device for the purpose of reducing the flexure amount of the meter cable. Since the meter cable for transmitting the signal from the vehicle speed detection device to the meter is guided by being held between the front-cover stay and the head pipe, the meter cable can be routed adjacent to the head pipe extending to the rotation center, whereby the length of the meter cable can be reduced.

In the invention, the cylindrical section of the front-cover stay is formed to be openable and closable. By placing the long brake hose or brake cable into the cylindrical section in an open state and then closing the cylindrical section, the brake hose or brake cable can be easily set in the cylindrical section. Therefore, if the operator and the brake device are previously assembled to the brake hose or brake cable, the brake hose or brake cable can be arranged to pass through the cylindrical section. As a result, an opening area of the cylindrical section can be minimized to be close to the flexible range of the brake hose or brake cable, while improving the assemblability.

In the invention, since the connector of the vehicle-side power supply harness is fixed to the front-cover stay, the harness extending from the lamp can be easily connected to the connector of the power supply harness, thereby improving the productivity.

Furthermore, in the invention, the front cover and the front-cover stay have a guide means by which the projection is guided to the grommet. Thus, the front cover can be easily assembled to the front-cover stay, thereby further improving the productivity.

### Brief Description of Drawings

Fig. 1 is a left side view of a saddled vehicle according to the present invention;
Fig. 2 is a front view of the saddled vehicle according to the present invention;
Fig. 3 is a cross-sectional view taken along line 3 - 3 of Fig. 2;
Fig. 4 is an exploded plan view of essential parts of the saddled vehicle according to the present invention;
Fig. 5 is a left side view of the essential parts of the saddled vehicle according to the present invention;
Fig. 6 is a right side view of the essential parts of the saddled vehicle according to the present invention; and
Fig. 7 is a view taken in a direction of arrow 7 of Fig. 5.

### Description of Embodiment

A certain preferred embodiment of the present invention will be described in detail below with reference to the accompanying drawings.

### Embodiment

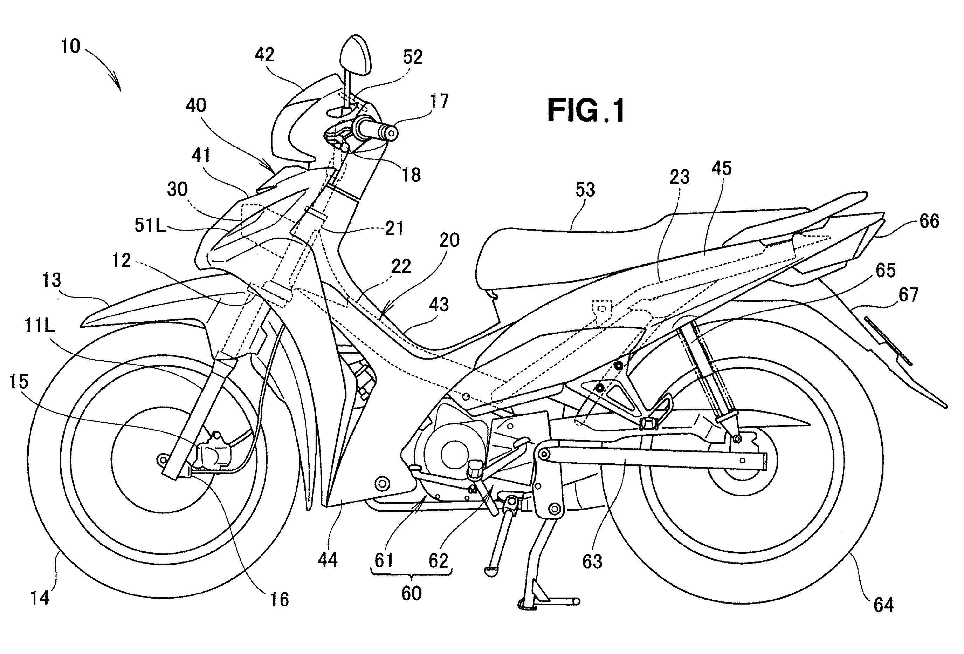

As shown in Fig. 1, a vehicle 10 is a saddled vehicle. The vehicle 10 includes a head pipe 21 constituting a front part of a vehicle body frame 20, a bottom bridge 12 joined to a lower end of the head pipe 21 and supporting upper ends of left and right front forks 11L, a front wheel 14 supported by the front forks 11L and having an upper part thereof covered by a front fender 13, a brake device 15 provided on one of the front forks 11L for braking the front wheel 14, and a vehicle speed detection device 16 provided in the vicinity of the brake device 15 to detect the speed of the vehicle 10.

The vehicle 10 further includes a front-cover stay 30 fixed to the head pipe 21 and extending toward the front of the vehicle, a front cover 41 mounted on the front-cover stay 30 to cover a front part of the head pipe 21, lamps 51L fitted to the front cover 41 to emit light toward the front of the vehicle, a handlebar 17 rotatably supported by an upper part of the head pipe 21, an operator 18 provided on the handlebar 17 for operating the brake device 15, a handlebar cover 42 for covering the handlebar 17, and a meter 52 arranged on the handlebar cover 42 for displaying vehicle speed information transmitted from the vehicle speed detection device 16.

The vehicle body frame 20 includes a main frame 22 extending obliquely rearward and downward from the head pipe 21, and a seat rail 23 extending obliquely rearward and upward from a rear end of the main frame 22 and supporting a seat 53 directly or indirectly.

A power unit 60 is mounted on the main frame 22. The power unit 60 is composed of an engine 61 and a transmission 62. A suspension member 63 is swingably connected to a rear part of the power unit 60, and a rear wheel 64 is rotatably supported by a rear end of the suspension member 63. The output of the engine 61 is transmitted to the rear wheel 64 via the transmission 62. Further, a cushion unit 65 is provided between a rear part of the suspension member 63 and the seat rail 23 for absorbing an impact applied to the rear wheel 64.

A tail lamp unit 66 is provided on a rear part of the seat rail 23. A rear fender 67 is arranged below the tail lamp unit 66 to cover upper and rear parts of the rear wheel 64. The vehicle 10 further includes a vehicle body cover 40 covering the vehicle body frame 20 etc.

The vehicle body cover 40 includes the front cover 41 covering at least part of the head pipe 21, the handlebar cover 42 covering the handlebar 17, a main frame cover 43 covering an upper part of the main frame 22, a main frame side cover 44 joined to the main frame cover 43 and covering lateral side parts of the vehicle 10, and a rear side cover 45 joined to the main frame cover 43 and covering the lateral side parts and a rear part of the vehicle.

Next will be described an external appearance of the vehicle in a front view.

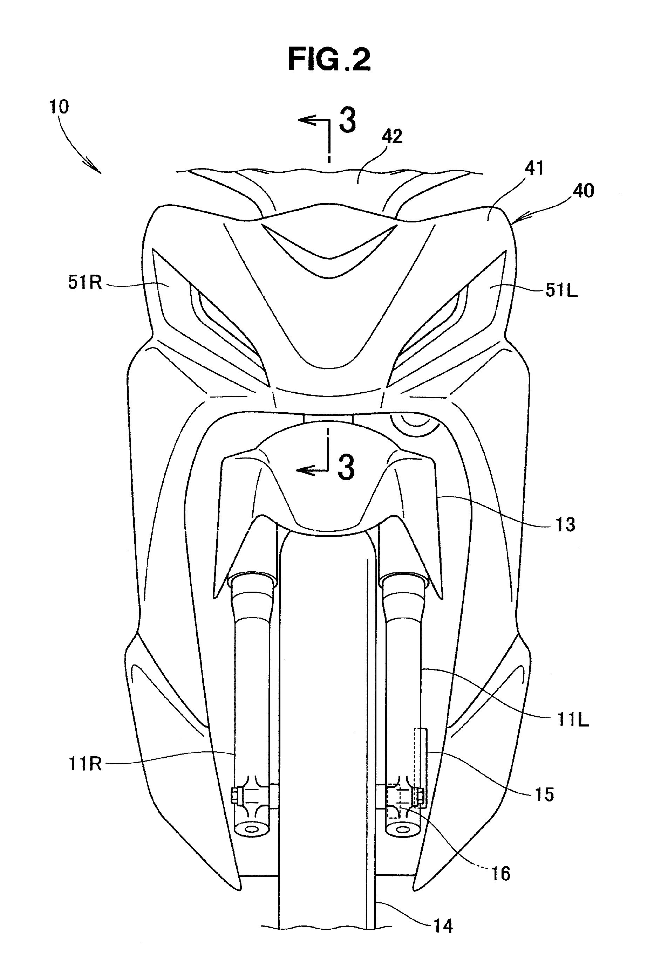

As shown in Fig. 2, the front cover 41 is provided with the left and right lamps 51L, 51R ("L" and "R" indicate respectively "left" and "right", and the same applies hereinafter). The front fender 13 is located within an opening formed on a lower side of the front cover 41. The left and right front fork 11L, 11R extends downward from the front fender 13, and the front wheel 14 is supported by the lower ends of the left and right front fork 11L, 11R. The brake device 15 is provided on the front fork 11L, and the vehicle speed detection device 16 is arranged at a position in the vicinity of the brake device 15 and closer to a rotation center of the front wheel 14 than the brake device 15.

Next will be described essential parts of the vehicle according to the present invention with reference to a cross-sectional view.

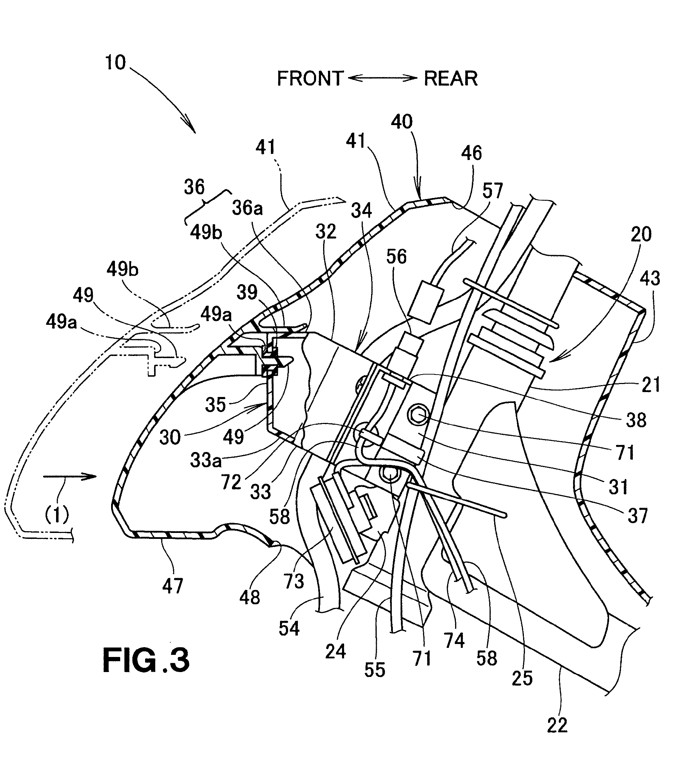

As shown in Fig. 3, the head pipe 21 is provided with a stay mounting portion 24 on the front part thereof for mounting thereon the front-cover stay 30. The front-cover stay 30 is fastened to the stay mounting portion 24 with bolts 71.

The front-cover stay 30 includes a fastening section 31 fastened to the stay mounting portion 24, a cylindrical section 34 located in front of the fastening section 31 and formed in a cylindrical shape having upper and lower parts 32, 33 thereof opened, a front part 35 located in front of the cylindrical section 34 and formed to support the front cover 41, a guide section 36a formed to extend substantially horizontally from an upper end of the front part 35 to the upper part 32, and a lower wall 33a formed to extend from a lower end of the front part 35 to cylindrical section 34. With the guide section 36a located forward of an upper end of the cylindrical section 34 and the lower wall 33a located forward of a lower end of the cylindrical section 34, a front side of the cylindrical section 34 is reinforced, whereby the cylindrical section 34 can have increased rigidity. Further, the fastening section 31 is formed in a plate shape and a rectangular shape elongated in a vertical direction along the head pipe 21, and fulfills a role as a rib reinforcing a rear side of the cylindrical section 34.

A brake hose 54 for transmitting an operational force of the operator 18 to the brake device 15 is disposed within the front cover 41. More specifically, the brake hose 54 is routed to enter from above the head pipe 21 into an upper opening 46 of the front cover 41, pass through the inside of the cylindrical section 34 of the front-cover stay 30, and emerge from a lower opening 48 formed in a lower face 47 of the front cover 41 to extend downward.

A meter cable 55 for transmitting a signal from the vehicle speed detection device 16 to the meter 52 is disposed within the front cover 41. The front-cover stay 30 is provided with a holding portion 37 for holding the meter cable 55. More specifically, the meter cable 55 entered from above the head pipe 21 into the upper opening 46 of the front cover 41 is held by the front-cover stay 30 and the holding portion 37. The meter cable 55 then passes through a hook section 25 provided at a lower part of the head pipe 21, and emerges from the lower opening 48 formed in the lower face 47 of the front cover 41 to extend downward. The meter cable 55 is routed in this manner.

The front-cover stay 30 further includes an auxiliary holding section 38 formed integrally therewith for holding a connector 56 as one of auxiliary components. The connector 56 is formed for connection with a harness 57 extending from the lamps 51L, 51R, and is provided to a power supply harness 58 disposed on the vehicle 10. The power supply harness 58 extending downward from the connector 56 is held by a clip 72 provided to the front-cover stay 30, and passed through the hook section 25.

A horn 73 is attached to a lower part of the stay mounting portion 24. A harness 74 for the horn 73 extends from the horn 73, and is also passed through the hook section 25.

The front-cover stay 30 is provided with a grommet 39 on the front part 35 thereof. The front cover 41 has a projection 49 formed on an inner side thereof, and the projection 49 is inserted into the grommet 39.

The front cover 41 further has a guide bar 49b formed on the inner side thereof and projecting toward the front-cover stay 30. The guide bar 49b and the guide section 36a of the front-cover stay 30 together constitute a guide means 36.

Next will be described how the front cover 41 is mounted.

The front cover 41 shown by an imaginary line is moved as indicated by arrow (1). The guide bar 49b shown by the imaginary line is brought into contact with the guide section 36a of the front-cover stay 30, and the front cover 41 shown by the imaginary line is thereby guided. The projection 49 shown by the imaginary line is inserted into the grommet 39. The projection 49 has a seat part 49a formed at a base end thereof, and the seat part 49a abuts on the grommet 39, whereby the projection 49 and the guide bar 49b are stopped at positions shown by a solid line. Thus, with the guide means 36, the front cover 41 can be easily assembled to the front-cover stay 30.

In the present embodiment, the brake hose 54 is connected to the brake device 15, however, it is not so limited, and a brake cable 54 may be used depending on a type of the brake device 15. For convenience, the embodiment is hereinafter explained in the case where the brake hose 54 is used.

Next will be described how the front-cover stay 30 is fixed and the brake hose 54 is arranged, with reference to a plan view.

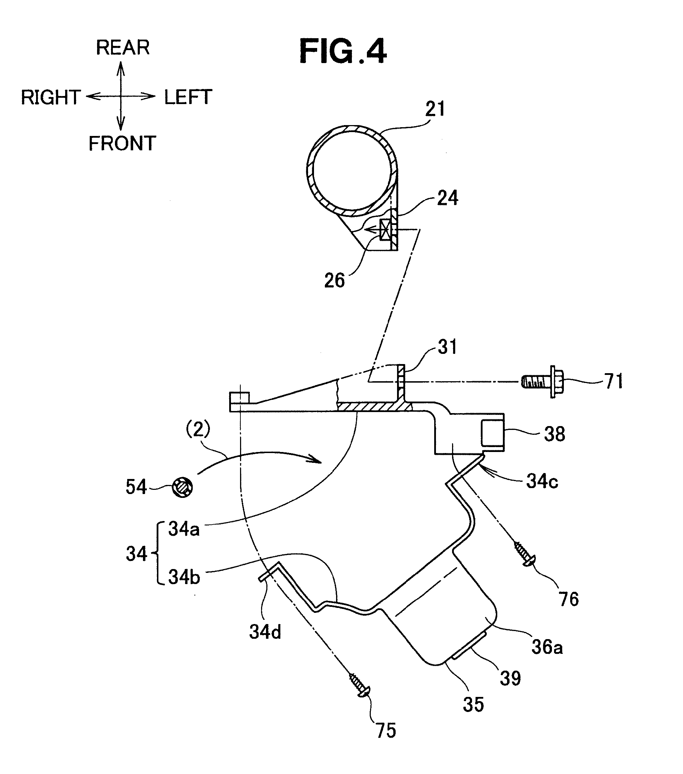

As shown in Fig. 4, a nut 26 is provided to the stay mounting portion 24 of the head pipe 21. The fastening section 31 of the front-cover stay 30 is fastened to the nut 26 with the bolt 71, and the front-cover stay 30 is thereby fixed to the head pipe 21.

The cylindrical section 34 is composed of a base part 34a on the rear side, and an opening/closing part 34b on the front side. The front-cover stay 30 has a flange-shaped hinge 34c, and a flange 34d opposite to the hinge 34c with the cylindrical section 34 therebetween.

In a state where the opening/closing part 34b is opened, the brake hose 54 is placed into the cylindrical section 34 as indicated by arrow (2). Then, the opening/closing part 34b is closed, and the hinge 34c is fastened to the base part 34a with the bolt 75. The brake hose 54 is thus arranged to pass through the cylindrical section 34.

The state of the brake hose 54 passing through the front-cover stay 30 will be described in detail below.

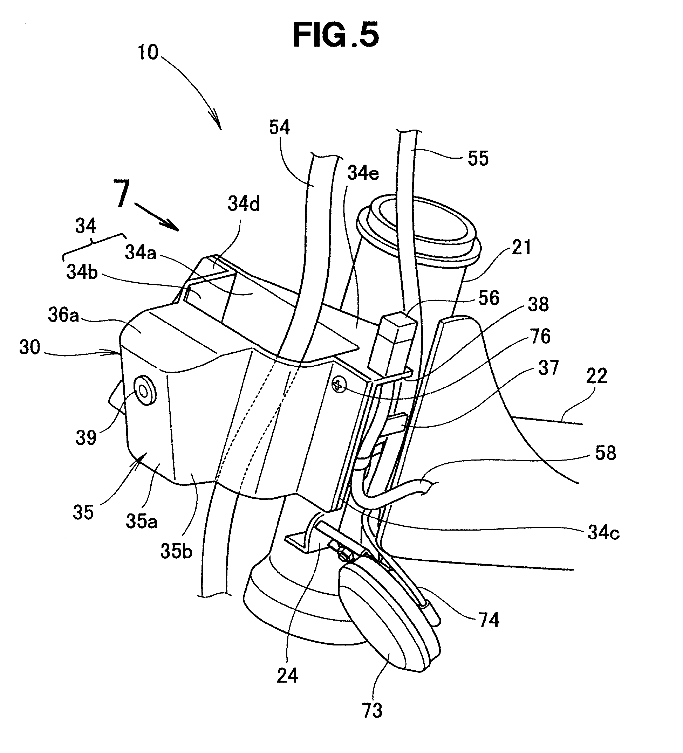

As shown in Fig. 5, the brake hose 54 is arranged to pass through the cylindrical section 34 of the front-cover stay 30 in the vertical direction. Since the front-cover stay 30 is disposed adjacent to the head pipe 21, the brake hose 54 passing through the cylindrical section 34 is routed adjacent to the head pipe 21. As a result, the length of the brake hose 54 can be minimized.

When the front wheel 14 is steered, the brake hose 54 is moved. However, since the cylindrical section 34 is formed to be larger than a flexible range of the brake hose 54, the brake hose 54 can be held appropriately.

Since the meter cable 55 is held between the head pipe 21 and the holding portion 37, the meter cable 55 is also routed adjacent to the head pipe 21, and the length of the meter cable 55 can also be minimized. Further, with the holding portion 37, there is no need to provide an additional member for holding the meter cable 55, and thus the number of components can be reduced.

The front-cover stay 30 includes the fastening section 31 fastened to the stay mounting portion 24, the base part 34a located in front of the fastening section 31, an upper flange 34e formed at an upper end of the base part 34a, the opening/closing part 34b located in front of the base part 34a and formed in a curved shape, the flange-shaped hinge 34c formed at one end in a vehicle width direction of the opening/closing part 34b to be elongated in the vertical direction, the flange 34d formed at the other end in the vehicle width direction of the opening/closing part 34b to be elongated in the vertical direction, and the box-shaped front part 35 located in front of the opening/closing part 34b.

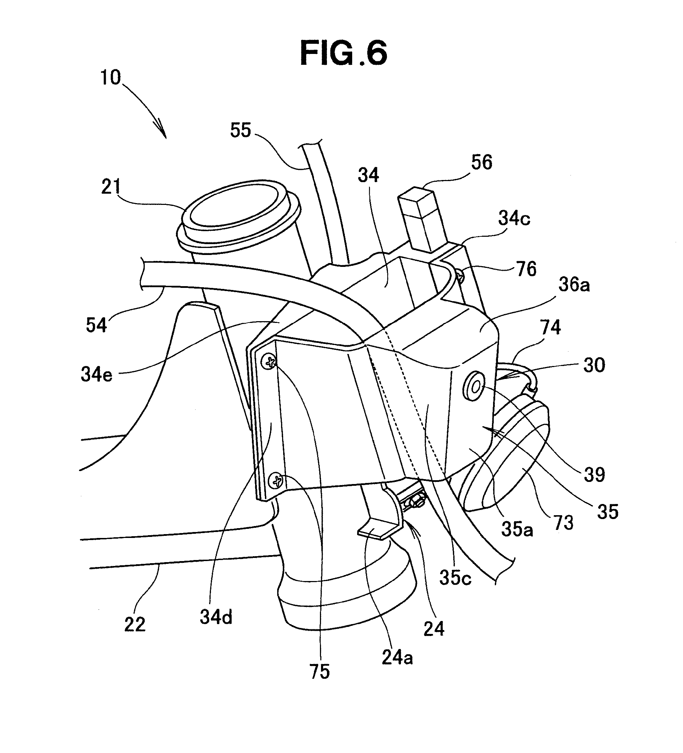

The box-shaped front part 35 includes a front wall 35a, the guide section 36a formed at an upper end of the front wall 35a, a side wall 35b formed at a left end of the front wall 35a, a side wall 35c (Fig. 6) formed at a right end of the front wall 35a, and the lower wall 33a (Fig. 3) formed at a lower end of the front wall 35a. The front part 35 is formed in a box shape having five faces of the front wall 35a, guide section 36a, side wall 35b, side wall 35c, and lower wall 33a closed, and the rear side thereof opened. With the box-shaped front part 35 located in front of the opening/closing part 34b, the rigidity of the cylindrical section 34 on the front side can be increased.

Further, with the flange-shaped hinge 34c formed on the left side of the cylindrical section 34, the flange 34d formed on the right side of the cylindrical section 34, and the upper flange 34e formed at the upper end of the cylindrical section 34, a periphery of the cylindrical section 34 can be reinforced. Since the cylindrical section 34 is located in the middle in a front-rear direction of the front-cover stay 30, and the periphery thereof is thus reinforced, the rigidity of the whole front-cover stay 30 can be increased, whereby the front cover 41 can be held firmly.

By fastening the flange-shaped hinge 34c with a bolt 76, the hinge 34c can be reinforced in the state where the cylindrical section 34 is closed.

As shown in Fig. 6, the brake hose 54 is routed to pass through the cylindrical section 34. The front-cover stay 30 is formed of resin, so that the brake hose 54 can be protected even when the brake hose 54 contacts with the cylindrical section 34. By fastening the flange 34d with two bolts 75, the flange 34d can be firmly fastened even though it is formed of resin.

The stay mounting portion 24 further has at a lower end thereof an L-shaped part 24a formed in an L shape, and the stay mounting portion 24 can thereby be firmly welded to the head pipe 21 in the vehicle width direction.

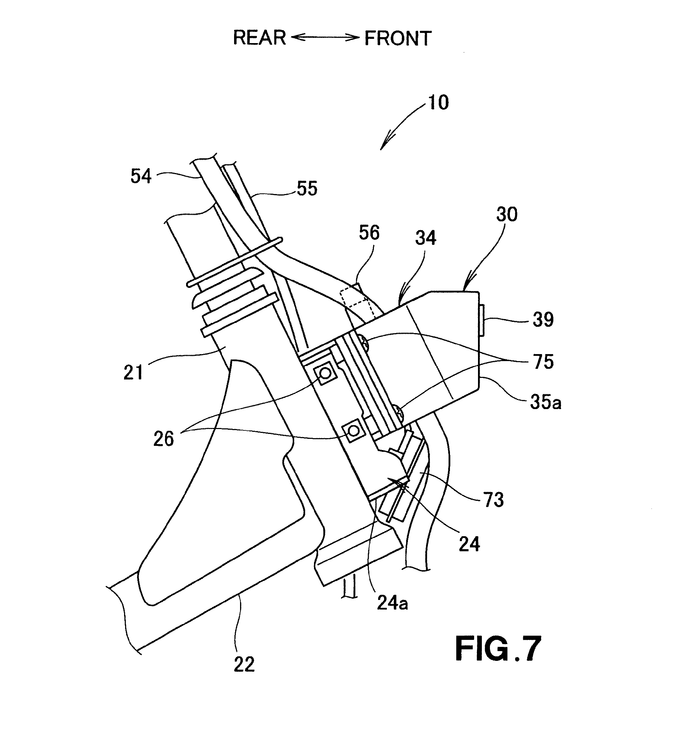

As shown in Fig. 7, the stay mounting portion 24 is formed long in the vertical direction along the head pipe 21, and welded to the head pipe 21. The stay mounting portion 24 can therefore be firmly welded to the head pipe 21 in the vertical direction. Additionally, the front cover 41 (Fig. 3) can be firmly supported in the vertical direction via the front-cover stay 30.

By forming the front wall 35a in a substantially vertical face, the amount of projection thereof in a longitudinal direction of the vehicle can be suppressed. Further, by arranging the front-cover stay 30 having the cylindrical section 34 adjacent to the head pipe 21, it is possible to hold the brake hose 54 in the flexible range thereof, while supporting the front cover 41, whereby the front part of the vehicle 10 can be made compact.

In the front part structure of the saddled vehicle according to the present invention, although the embodiment has been explained in the case where only the brake hose is arranged to pass through the cylindrical section, it is not so limited, and cables having flexible ranges, such as the meter cable and the harness, may be arranged to pass through the cylindrical section.

### Industrial Applicability

The front part structure of the present invention is well suited for use in saddled vehicles.

### Reference Characters

10 ... vehicle (saddled vehicle), 14 ... front wheel, 15 ... brake device, 16 ... vehicle speed detection device, 18 ... operator, 20 ... vehicle body frame, 21 ... head pipe, 30 ... front-cover stay, 34 ... cylindrical section, 36 ... guide means, 38 ... auxiliary holding section, 39 ... grommet, 41 ... front cover, 49 ... projection, 51L, 51R ... lamps, 52 ... meter, 54 ... brake hose (brake cable), 55 ... meter cable, 56 ... auxiliary component (connector), 57 ... harness

## Claims

1. A front part structure of a saddled vehicle, which includes a head pipe disposed to constitute a front part of a vehicle body frame and steerably supporting a front wheel, a front-cover stay fixed to the head pipe and extending toward the front of the vehicle, a front cover mounted on the front-cover stay to cover a front part of the head pipe, an operator provided above the head pipe for operating a brake device of the front wheel, and an operational force transmission member in the form of a brake hose or brake cable disposed within the front cover for transmitting an operational force of the operator to the brake device, **characterized in that**:
the front-cover stay has a cylindrical section formed in a cylindrical shape having upper and lower parts thereof opened; and
the operational force transmission member is arranged to pass through the inside of the cylindrical section.

2. The front part structure of the saddled vehicle of claim 1, wherein the front-cover stay is formed of resin.

3. The front part structure of the saddled vehicle of claim 1 or 2, wherein the front-cover stay is provided with a grommet on a front part thereof, the front cover has a projection formed on an inner side thereof, and the projection is inserted into the grommet to be engaged therewith.

4. The front part structure of the saddled vehicle of any one of claims 1 to 3, wherein the front-cover stay has an auxiliary holding section formed integrally therewith for holding auxiliary components.

5. The front part structure of the saddled vehicle of any one of claims 1 to 4, wherein a vehicle speed detection device for detecting the speed of the vehicle is provided at a position in the vicinity of the brake device and closer to a rotation center of the front wheel than the brake device, wherein a meter for displaying speed information of the vehicle is provided above the head pipe, and wherein a meter cable for transmitting a signal from the vehicle speed detection device to the meter is guided by being held between the front-cover stay and the head pipe.

6. The front part structure of the saddled vehicle of any one of claims 1 to 5, wherein the cylindrical section of the front-cover stay is formed to be openable and closable.

7. The front part structure of the saddled vehicle of any one of claims 1 to 6, wherein the front cover is provided with a lamp, and wherein a connector of a vehicle-side power supply harness for connection with a harness extending from the lamp is fixed to the front-cover stay.

8. The front part structure of the saddled vehicle of claim 3, wherein the front cover and the front-cover stay have a guide means for guiding the projection to the grommet.

## Amended claims

### Amended claims under Art. 19.1 PCT

**1.** (Amended) A front part structure of a saddled vehicle, which includes a head pipe disposed to constitute a front part of a vehicle body frame and steerably supporting a front wheel, a resin front-cover stay fixed to the head pipe and extending toward the front of the vehicle, a front cover mounted on the front-cover stay to cover a front part of the head pipe, an operator provided above the head pipe for operating a brake device of the front wheel, and an operational force transmission member in the form of a brake hose or brake cable disposed within the front cover for transmitting an operational force of the operator to the brake device, **characterized in that**:
the front-cover stay has a cylindrical section formed in a cylindrical shape having upper and lower parts thereof opened; and
the operational force transmission member is arranged to pass through the inside of the cylindrical section.

**2.** Cancelled)

**3.** (Amended) The front part structure of the saddled vehicle of claim 1, wherein the front-cover stay is provided with a grommet on a front part thereof, the front cover has a projection formed on an inner side thereof, and the projection is inserted into the grommet to be engaged therewith.

**4.** (Amended) The front part structure of the saddled vehicle of claim 1 or 3, wherein the front-cover stay has an auxiliary holding section formed integrally therewith for holding auxiliary components.

**5.** (Amended) The front part structure of the saddled vehicle of claim 1, 3 or 4, wherein a vehicle speed detection device for detecting the speed of the vehicle is provided at a position in the vicinity of the brake device and closer to a rotation center of the front wheel than the brake device, wherein a meter for displaying speed information of the vehicle is provided above the head pipe, and wherein a meter cable for transmitting a signal from the vehicle speed detection device to the meter is guided by being held between the front-cover stay and the head pipe.

**6.** (Amended) The front part structure of the saddled vehicle of any one of claims 1 and 3 to 5, wherein the cylindrical section of the front-cover stay is formed to be openable and closable.

**7.** (Amended) The front part structure of the saddled vehicle of any one of claims 1 and 3 to 6, wherein the front cover is provided with a lamp, and wherein a connector of a vehicle-side power supply harness for connection with a harness extending from the lamp is fixed to the front-cover stay.

**8.** The front part structure of the saddled vehicle of claim 3, wherein the front cover and the front-cover stay have a guide means for guiding the projection to the grommet.

**9.** Added) The front part structure of the saddled vehicle of claim 1, wherein the front-cover stay has a guide section located forward of an upper end of the cylindrical section and formed to extend substantially horizontally, and a lower wall located forward of a lower end of the cylindrical section.
